# EUROPEAN PATENT SPECIFICATION

(11) **EP 1 160 608 B1**
(45) Date of publication and mention of the grant of the patent: **05.10.2005**
(21) Application number: 01830342.0
(22) Date of filing: 28.05.2001
(51) Int. Cl.: G02B 6/44

(54) **Connection container for optical and/or copper mixed cables**
Gehäuse zur Verbindung von optischen bzw. Kupferkabeln
Boitier de connexion pour des cables à fibres optiques et/ou fils électriques en cuivre

(30) Priority: 29.05.2000 IT RM000110; 13.10.2000 IT RM000194
(43) Date of publication of application: 05.12.2001
(73) Proprietor: FIBOT HOLDING LTD., Valletta VLT 03 (MT)
(72) Inventor:
(74) Representative: Taliercio, Antonio

(56) References cited:
- EP-A- 0 657 756
- DE-A- 2 824 477
- US-A- 5 774 618

## Description

This invention relates to an improved connection container for optical cables and/or optical and copper mixed cables.

This invention broadly relates to manufacturing and utilizing connection containers for optical cables and more particularly it concerns the construction of a container for containing the connections of optical cables and/or mixed optical and copper cables, said container being completely equipped with means for operating the connections, housing them in water tight condition and accessing them for maintenance operations.

As it is known, the companies managing telephone or telecommunication services and realizing to this purpose a cable based communication network usually utilize as a communication material support optical fibers collected together in the form of fiber bundles so as to form optical cables having high transmission capability and efficiency.

Optical cables as presently industrially manufactured have a nominal length of about three thousand meters and this entails that, should the need arise to realize connections of higher length, as it frequently occurs, it is necessary to successively connect a number of lengths of the industrial nominally available cable.

Since any fiber has an intrinsic attenuation figure which increases when the fiber is cut and subsequently connected, it is obvious that it is necessary, first of all, to restrict the number of connections to a minimum and then to realize the fibers themselves as accurately and reproducibly as possible. The more so, when it is considered that the sole access point of the fibers of an optical cable is just the connection point of said lengths.

From this view point, since the optical fibers are not protected at their length connections as they are in the intermediate cable portions and since the external environmental moisture can be so harmful as to increase said intrinsic attenuation figure and/or to decrease the useful life duration of the fibers, the need arises to realize with particular care a proper water tight container to house the cable connections under maintainment of their ease accessibility for any kind of intervent and particularly for maintenance operations thereon.

A first prior art document is European patent application No. 657 756 A, which is considered to represent the most relevant state of the art, and discloses a connection container for optical cables and/or optical and copper mixed cables comprising a base plate provided with passage holes and a cap cover, means for sealingly coupling said base plate to said cap cover, means for passing and blocking cables through said base plate, a support frame structure comprising means for connecting the ends of said optical fibres under accomodation of any extra length and realisation of anti-stress paths housed in said connection container and rigidly connected to said base plate. Further, EP 657 756 A discloses that the base plate has at its circumferential edge a groove for housing a sealing annular gasket.

However, the disclosed position of said groove is such that, when closing or opening the container, the sealing gasket is subject to friction caused by the contact with the sliding walls of the cap cover. As a consequence, the closing and opening of the connection container is particularly difficult and the sealing gasket needs to be replaced because of wearing.

A similar solution is disclosed in US Patent No. 5,774,618, regarding a closure for optical fiber cables comprising a base plate and a cover member, the base plate having an O-ring seal for sealing the base plate to the cover member by means of over-center latches. However, these over-center latches do not permit to regulate the coupling force, taking into consideration different degree of wearing of the O-ring seal.

A further prior art document, Italian Patent No. 1306888 of the same Applicant, discloses a connection container for optical fiber cables comprising a base plate provided with passage holes and a cap cover provided with a suitable lower edge flange, and further comprising means for coupling said base plate to said cap cover and for realizing an isobaric chamber therebetween, means for passing and blocking cables through said base plate, means for connecting the ends of said optical fibers under accommodation of any extra length and realization of anti-stress paths, all said means being housed in said connection container. In a subsequent prior art document of the same Applicant, Italian Utility Model No. 247672, the above approach was further improved in order to cope with the difficulties encountered in realizing the necessary mechanical closure, by means of a connection container comprising means for coupling said base plate to said cap cover completely realized within said container. Such means included a coupling bar centrally welded to the base plate and screw-threaded at its upper end for threadedly coupling to a corresponding internally screw-threaded sleeve axially fixed to the upper internal recess of said cap cover. Furthermore, the needed watertight closure of said connection container was assured by a annular sealing gasket housed in an annular groove realized in said base plate.

It has been found, however, at least in certain operation conditions and in certain applications, that such a container is subject to not uniformly distributed stresses in realizing its mechanical closure. Such problem was even more complicated by a not optimum coupling between said sealing gasket and the above mentioned cap cover.

It is an object of this invention, therefore, to propose a container for housing the connections of buried or aerial optical fiber and/or mixed networks of the above mentioned kinds, but characterized by a further simplified and improved construction, so as to make all installation, as well as closing and re-opening operations easier according to the needs.

In a connection container for optical cables and/or optical and copper mixed cables comprising a base plate provided with passage holes and a cap cover provided with an upper eyebolt for aiding the mechanical and lifting operations, means for water tight coupling said base plate to said cap cover, means for passing and blocking cables through said base plate, a support frame structure comprising means for connecting the ends of said optical fibers under accommodation of any extra length and realization of anti-stress paths housed in said connection container and rigidly connected to said base plate, the above mentioned object is fulfilled according to this invention by the following provisions:
- said base plate has at its circumferential edge an angular housing seat for housing a sealing annular gasket,
- said cap cover has an angled lower edge flange adapted to embrace said base plate, to house and to compress said sealing annular gasket therebetween,
- said coupling means provided on the cap cover for water tight coupling said base plate to said cap cover comprise a rod having an upper end and a lower end portion, being centrally welded with its upper end to the internal upper surface of said cap cover and being provided with a screw-thread at its lower end, and said corresponding coupling means provided on said support frame structure (13) comprise a tubular guide, extending vertically from the central part of the upper portion of said support frame structure to the central part of its opposite portion, close to said base plate (1), said rod being mounted so as to be inserted through said tubular guide, to inferiorly protrude through a hole provided in said base plate and to be securely locked thereon by external locking means provided with protection means in respect of external environment influences.

Furthermore, said external locking means provided for locking said screw-threaded rod comprise a nut.

Additionally according to this invention, said means for protecting the means provided for locking said base plate and the screw-threaded lower portion of said screw-threaded rod protruding from said base plate include a water tight sealing cap which is threadedly engaged on said screw-threaded lower end with interposition of a sealing gasket .

Further details, particulars and advantages of this invention will be apparent from the following description with reference to enclosed drawings, in which one preferred embodiment is shown by way of illustration and not by way of limitation.

In the drawings:
Figure 1 is an upper perspective view of a comparative example for a connection container, showing the base plate bearing a conventional support frame for modular fiber connecting and positioning plates as well as a portion of a cap cover for the container,
Figure 2 is a bottom perspective view of the connection container according to a preferred embodiment, and
Figure 3 is a detail cross-section view of the coupling between said cap cover and said base plate.

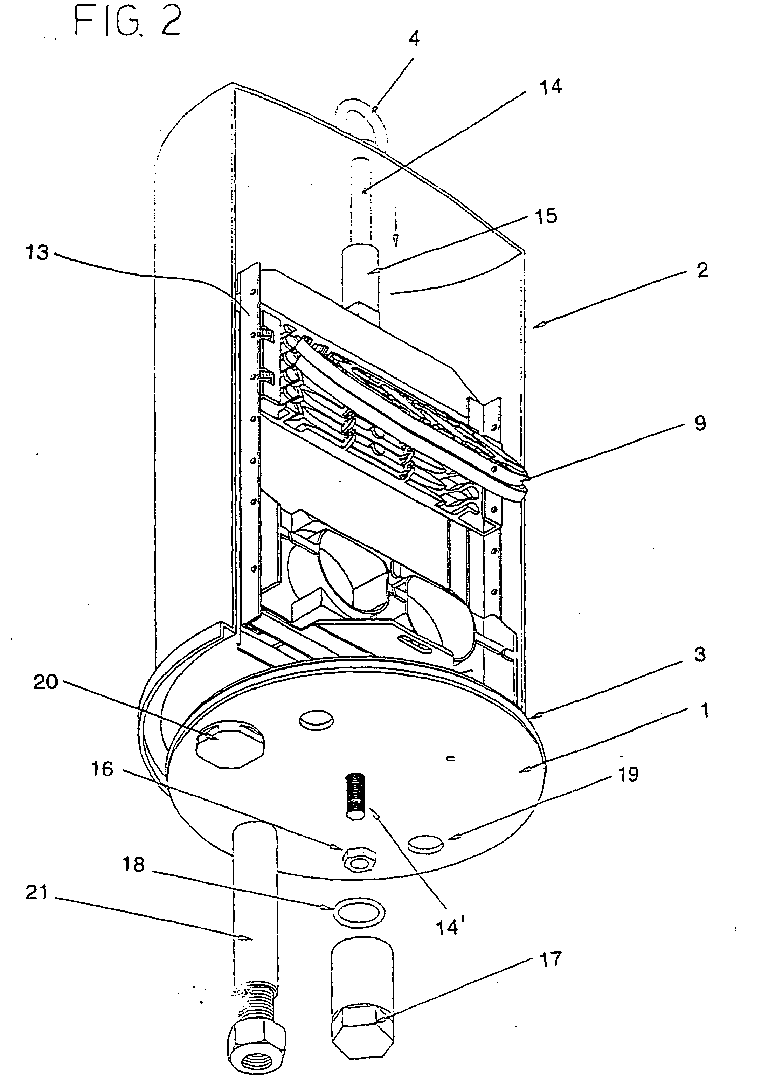

By preliminarly referring to Figure 2 and assuming that the construction is realized according to the best possible technical procedures as presently available for products of this kind, it can be observed that the connection container according to this invention includes two substantial component members, namely a base plate 1 and a bell-like cylindrically shaped cap cover 2, realized of metal or plastics or any other suitable material as it is known to those skilled in the art.

A frame structure 13 acting as a support frame for the conventional modular plates utilized for connecting and defining the path positions of the connected fibers is mounted within the container. Said support frame 13 is to be considered as known in the art and its characteristics are not part of this invention. As it will be apparent hereinbelow, it is fixedly secured to said base plate 1 and, for explanation reasons only, it will be considered hereinbelow as integral part of the base plate.

Cap cover 2 has at its upper surface a suitable eyebolt 4 aimed at aiding the mechanical and lifting operations of the cap cover after completion of the fiber connection operations and during the subsequent anchorage operations of the container eventually to an aerial support.

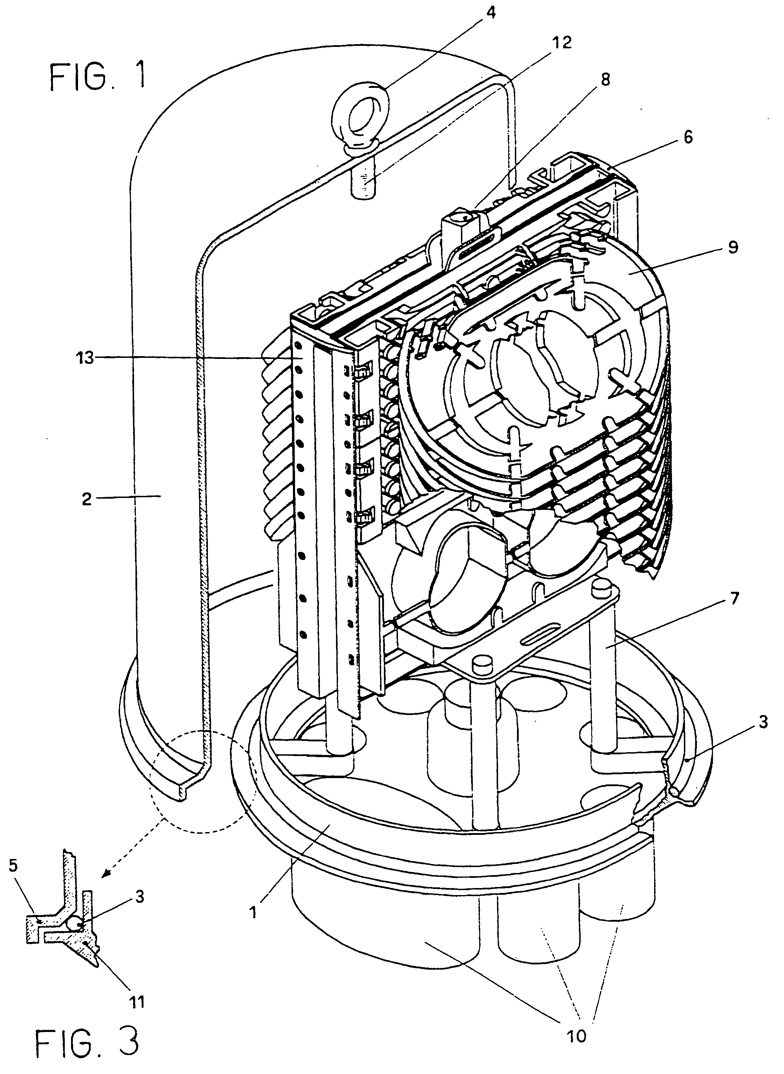

In the comparative example shown in Fig. 1, the base plate 1 and the cap cover 2 are coupled to each other by means of a screw-threaded pin 12, centrally welded to the upper internal surface of cap cover 2 in axially aligned condition with respect to said eyebolt 4 and realized so as to be threadedly coupled to an internally screw-threaded sleeve 8, centrally mounted to the upper section of said support frame 13, in order to uniformly and securely couple the above mentioned two overposed component members together.

The above mentioned frame structure 13 besides operating as a support member for the modular connection plates 9 also acts as a distributor member for uniformly distributing the tension load due to the locking operation of cap cover 2 on the base plate 1.

Said frame structure 13 is then securely fixed to the base plate 1 by means of at least four locking pins 7 specifically having also the function to optimally distributing the tension load over the base plate. The construction of said frame is completed by two reinforcement members 6 adapted to add a higher mechanical stiffness to the frame itself.

An advantageous aspect of this embodiment of the present invention is that the direct realization of the closure mechanism on said frame structure 13 results into a single locking force being exploited between said base plate 1 and said cap cover 2 during the closing operation and such locking force is distributed in such a manner as to uniformly compress the above mentioned sealing gasket 3, thereby obtaining a perfect closure.

Furthermore, it is to be underlined that the whole closing operation is a single step operation, namely consisting in turning the cap cover 2, and this turning operation can be carried out by a dynamometric lever acing on said eyebolt 4, otherwise used for mechanically lifting the whole container.

By observing the coupling between the bottom edge 5 of said cap cover 2 and the edge of the base plate 1, it can be understood that such coupling allows to prevent any oscillations of the cap cover during the opening and closing operations, thereby maintaining its turning axis in perfectly central position.

By referring now to Figure 2, it can be observed that said cap cover and said base plate are coupled by means of a rod 14 having an upper end and a lower end 14', centrally welded with its upper end to the internal upper surface of said cap cover 2 and provided with a screw-thread at its lower end 14'. During the installation stage, said rod 14 is so far inserted into a tubular guide 15 provided among the modular plates 9 of said support frame 13 as to inferiorly protrude with its lower screw-threaded end 14' through a hole provided in said base plate. A nut 16 is threadedly engaged with said screw-threaded lower end 14' of said rod 14 and thereby enables said cap cover 2 to be securely locked to said base plate 1.

The screw-threaded portion of said rod 14 and nut 16 are isolated from the external environment by means of an internally screw-threaded sealing cap 17 provided with sealing gasket 18 which is threadedly engaged on said screw-threaded lower end 14' of said rod 14.

The closure mechanism for the described connection container, therefore, is completely protected from all external environment influences.

A further advantageous aspect of this embodiment of the present invention consists in that the realization of the closure mechanism by means of said screw-threaded rod 14 and of said nut 16 allows not only to simplify the whole closing operation but also to realize a water tight closure without subjecting the internal structures to mechanical stresses (it should be noted that this embodiment does not require the reinforcement members provided in the firstly described comparative example to add a higher stiffness to said frame structure 13). Furthermore, in this case, the closing operation is carried out without turning the cap cover 2 with respect to the base plate 1, thereby decreasing the friction therebetween and assuring a better closure.

Figure 3 evidences that the water tight sealing of the coupling between the base plate 1 and the cap cover 2 is assured by an approach in which said cap cover 2 is provided with an angled lower edge flange 5 that embraces and tightly closes said base plate 1 with interposition of a suitable annular sealing gasket 3 arranged around said plate and housed in suitable angular housing seat 11 therein.

Said annular sealing gasket 3 is arranged so as to be subject to compression forces from three different directions, thereby increasing its efficiency.

In the above described embodiment, the closure mechanism for the concerned container appears to be anyway completely arranged in the inner room of the container itself and, therefore, in perfectly protected condition.

As far as the introduction of the cables into the container is concerned, it can be observed by referring to Figures 1 and 2 that the base plate 1 of the container is provided with suitable inlet ports 19, that can also be closed by purposely designed stoppers 20, having devices 10 applied thereon for passage and fixation of said cables, as exhaustively described in the above mentioned previous Italian patent No. 1306888.

Lastly, the base plate 1 is provided with a cylindrical support 21 with lower screw-threaded pin and associated locking nut designed for mounting the whole connection container upon an external anchorage bracket.

The preferred embodiment of this invention has been described and a number of variations have been suggested hereinbefore, but it should expressly be understood that those skilled in the art can make other variations and changes, without so departing from the scope thereof, as defined in the attached claims.

## Claims

1. An improved connection container for optical cables and/or optical and copper mixed cables comprising a base plate (1) provided with passage holes (18) and a cap cover (2) provided with an upper eyebolt (4) for aiding the mechanical and lifting operations, means for coupling said base plate (1) to said cap cover (2), means (10) for passing and blocking cables through said base plate (1), a support frame structure (13) comprising means for connecting the ends of said optical fibers under accommodation of any extra length and realization of anti-stress paths housed in said connection container and rigidly connected to said base plate (1),
- said base plate (1) having at its circumferential edge an angular housing seat (11) for housing a sealing annular gasket (3),
- said cap cover (2) having an angled lower edge flange (5) adapted to embrace said base plate (1), to house and to compress said sealing annular gasket (3) therebetween,
- said means for coupling said base plate (1) to said cap cover (2) consisting of a central closure mechanism for applying a single axial locking force between said base plate (1) and said cap cover (2),
**characterised in that**
said coupling means comprise a rod (14) having an upper end and a lower end portion (14'), said upper end being welded to the centre of the internal upper surface of said cap cover (2) and said lower end (14') being provided with a screw-thread,
said support frame structure (13) comprises a tubular guide, extending from the central part of the upper portion of said support frame structure to the central part of the lower portion, close to said base plate (1),
in a closed position said rod (14) being mounted so as to be inserted through said tubular guide, its lower end (14') inferiorly protruding through a hole provided in said base plate (1) and being securely locked thereon by external locking means provided with protection means (17, 18) in respect of external environment influences.

2. An improved connection container for optical cables and/or optical and copper mixed cables according to claim 1, **characterized in that** said external locking means provided for coupling with said screw-threaded lower end (14') of said rod (14) comprise a nut (16).

3. An improved connection container for optical cables and/or optical and copper mixed cables according to claim 1 or 2, **characterized in that** said means for protecting the means provided for locking said base plate (1) and the screw-threaded lower portion (14') of said screw-threaded rod (14) protruding from said base plate (1) include a water tight sealing cap (17) which is threadedly engaged on said screw-threaded lower end (14') with interposition of a sealing gasket (18).

## Patentansprüche

1. Verbesserter Verbindungsbehälter für optische Kabel und/oder optische und mit Kupfer gemischte Kabel, umfassend eine Basisplatte (1), die mit Durchgangslöchern (18) sowie einer Abdeckklappe (2), die mit einem oberen Splint (4) zum Unterstützen der mechanischen und Anhebe-Operationen versehen ist, mit Mitteln zur Ankopplung der Basisplatte (1) an der Abdeckplatte (2), Mitteln (10) zum Hindurchführen und Blockieren der Kabel durch die Basisplatte (1), einer Abstütz-Rahmenstruktur (13), die Mittel zum Verbinden der Enden der optischen Fasern unter Aufnahme jeder Extralänge und der Realisierung von Anti-Belastungs-Durchgängen, die in dem Verbindungsbehälter eingehaust sind und starr mit der Basisplatte (1) verbunden sind, versehen ist, wobei
- die Basisplatte (1) an deren umfänglicher Kante einen schrägen Gehäusesitz (11) zum Einhausen eines kreisförmigen Dichtrings (3) aufweist,
- die Abdeckplatte (2) einen schrägen unteren Kantenflansch (5) aufweist, der so angeordnet ist, dass er die Basisplatte (1) umfasst, um dazwischen den kreisförmigen Dichtring (3) einzuhausen und zu komprimieren,
- die Mittel zum Kuppeln der Basisplatte (1) an der Abdeckkappe (2) aus einem zentralen Verschließmechanismus zum Aufbringen einer einzelnen axialen Verschließkraft zwischen der Basisplatte (1) und der Abdeckkappe (2) enthält,
**dadurch gekennzeichnet, dass**
das Kupplungselement eine Stange (14) umfasst, die ein oberes Ende und einen unteren Endabschnitt (14') aufweist, wobei das obere Ende mit dem Zentrum der inneren oberen Oberfläche der Abdeckkappe (2) verschweißt ist und das untere Ende (14') mit einem Schraubengewinde versehen ist,
die Abstütz-Rahmenstruktur (13) eine röhrenförmige Führung umfasst, die sich von dem zentralen Teil des oberen Abschnitts der Abstütz-Rahmenstruktur zum zentralen Teil des unteren Abschnitts nahe der Basisplatte (1) erstreckt,
die Stange (14) in einer geschlossenen Position derart befestigt ist, dass sie durch die röhrenförmige Führung eingeführt ist, wobei deren unteres Ende (14') untergeordnet durch ein Loch hervorragt, welches in der Basisplatte (1) vorgesehen ist, und sicher durch externe Verschließelemente, die mit Sicherungsmitteln (17, 18) in Bezug auf äußere Umwelteinflüsse zur Verfügung gestellt sind, daran angeschlossen ist.

2. Verbesserter Verbindungsbehälter für optische Kabel und/oder optische mit Kupfer gemischte Kabel gemäß Anspruch 1, **dadurch gekennzeichnet, dass** das externe Verschließelement, welches zur Verkupplung mit dem mit einem Schraubengewinde versehenen unteren Ende (14') der Stange (14) vorgesehen ist, eine Gewindemutter (16) umfasst.

3. Verbesserter Verbindungsbehälter für optische Kabel und/oder optische mit Kupfer gemischte Kabel gemäß Anspruch 1 oder 2, **dadurch gekennzeichnet, dass** das Mittel zum Schützen der Elemente, die zum Verschließen der Basisplatte (1) und dem mit einem Gewinde versehenen unteren Abschnitt (14') der mit einem Gewinde versehenen Stange (14), die von der Basisplatte (1) hervorsteht, eine wasserdichte Abdichtkappe (17) beinhaltet, die an dem mit einem Gewinde versehenen unteren Ende (14') mit Einfügung eines Dichtungsrings (18) im Gewindeeingriff steht.

## Revendications

1. Conteneur perfectionné pour la connexion de câbles optiques et/ou autres câbles optiques et câbles de cuivre mélangés, comprenant une plaque de base (1) pourvue de trous de passage (18) et un capot (2) formant capuchon équipé d'un boulon à oeillet supérieur (4) servant à faciliter les opérations mécaniques et de soulèvement, des moyens pour coupler ladite plaque de base (1) audit capot formant capuchon (2), des moyens (10) pour faire passer et bloquer des câbles à travers ladite plaque de base (1), une structure de cadre de support (13) comprenant des moyens pour connecter les extrémités desdites fibres optiques tout en logeant une quelconque longueur supplémentaire et en réalisant des trajets anti -contraintes logés dans ledit conteneur de connexion et connectée rigidement à ladite plaque de base (1),
- ladite plaque de base (1) possédant au niveau de son bord circonférentiel un siège de boîtier angulaire (11) pour loger une garniture d'étanchéité annulaire (3),
- le capot formant capuchon (2) possédant une bride de bord inférieur anguleuse (5) adaptée pour enserrer ladite plaque de base (1) et loger et comprimer ladite garniture d'étanchéité annulaire (3) entre eux;
- lesdits moyens pour coupler ladite base (1) audit capot formant capuchon (2) consistant en un mécanisme central de fermeture pour appliquer une seule force de blocage axiale entre ladite plaque de base (1) et ledit capot formant capuchon (2),
**caractérisé en ce que**
lesdits moyens de couplage comprennent une tige (14) possédant une extrémité supérieure et une partie d'extrémité inférieure (14'), ladite extrémité supérieure étant soudée au centre de la surface supérieure interne dudit capot formant capuchon (2) et ladite extrémité inférieure (14') étant pourvue d'un filetage;
ladite structure de cadre de support (13) comprend un guide tubulaire, qui s'étend depuis la partie centrale de la partie supérieure de la structure de cadre de support jusqu'à la partie centrale de la partie inférieure, à proximité de ladite plaque de base (1),
dans une position fermée, ladite tige (14) étant montée de manière à être insérée dans ledit guide tubulaire, son extrémité inférieure (14') faisant saillie intérieurement à travers un trou prévu dans la plaque de base (1) et étant fixée en étant bloquée sur cette dernière à l'aide de moyens de blocage externes pourvus de moyens de protection (17,18) par rapport auxdites influences externes de l'environnement.

2. Récipient perfectionné de raccordement pour des câbles optiques et/ou des câbles optiques et en cuivre mélangés selon la revendication 1, **caractérisé en ce que** lesdits seconds moyens de blocage externes prévus pour le couplage avec ladite extrémité inférieure filetée (14') de ladite tige (14) comprennent un écrou (16).

3. Conteneur de raccordement perfectionné pour des câbles optiques et/ou des câbles optiques et en cuivre mélangés selon la revendication 1 ou 2, **caractérisé en ce que** lesdits moyens pour protéger les moyens prévus pour bloquer ladite plaque de base (1) et la partie inférieure filetée (14') de ladite tige filetée (14) faisant saillie à partir de ladite plaque de base (1) incluent un capuchon d'étanchéité à l'eau (17), qui engrène par vissage sur ladite extrémité intérieure filetée (14') avec interposition d'une garniture d'étanchéité (18).
